# EUROPEAN PATENT SPECIFICATION

(11) **EP 1 553 819 B1**
(45) Date of publication and mention of the grant of the patent: **28.03.2007**
(21) Application number: 03771251.0
(22) Date of filing: 30.07.2003
(51) Int. Cl.: A01K 1/01

(54) **DISPOSABLE TOILET-BOX FOR CATS**
WEGWERFBARES KATZENKLO
BOITE-TOILETTES JETABLE POUR CHATS

(30) Priority: 30.07.2002 IT VA20020042
(43) Date of publication of application: 20.07.2005
(73) Proprietor: De Gaudenzi, Pia Luisa, 22032 Albese con Cassano (CO) (IT)
(72) Inventor: De Gaudenzi, Pia Luisa, 22032 Albese con Cassano (CO) (IT)
(86) International application number: PCT/IT2003/000475
(87) International publication number: WO 2004/010772

(56) References cited:
- WO-A-95/09528
- FR-A- 2 754 421
- US-A- 4 628 863
- US-A- 4 932 360
- US-A- 4 967 692
- US-A- 5 117 781
- US-A- 5 488 929
- US-A- 5 572 951
- US-A- 5 730 085

## Description

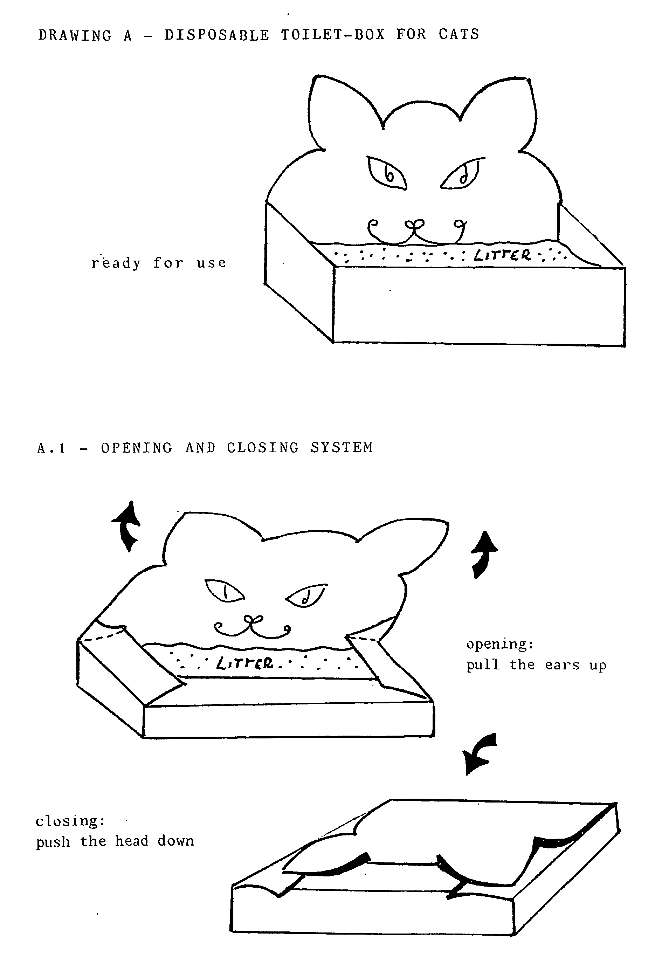

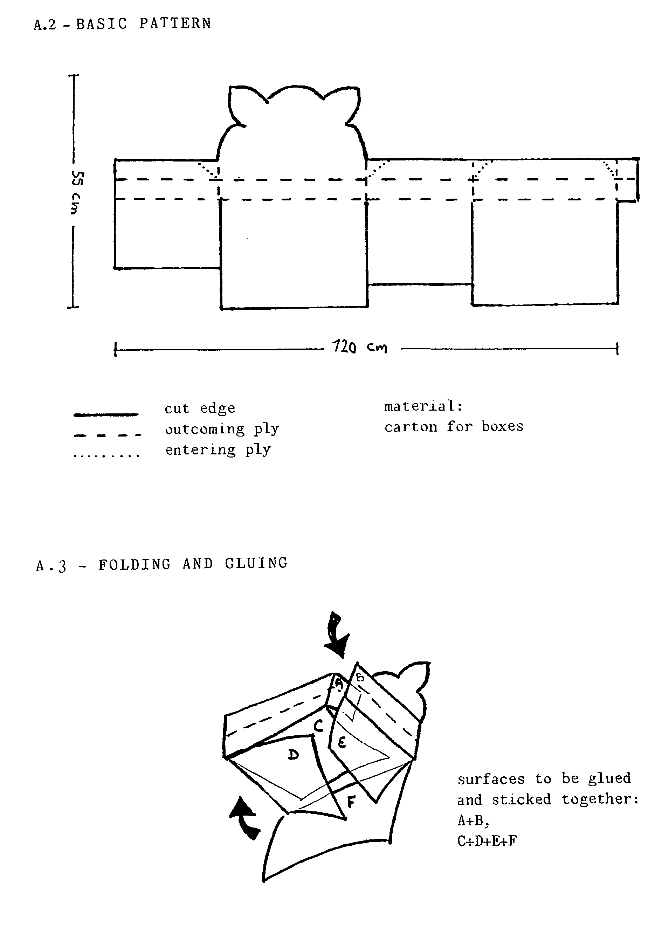

The invention is referred to the boxes (or trays) into which one fill sand (or hygienic litter) and which are used as toilet by cats. It is a toilet-box realized in the disposable version, which after having been used is destinated to the trash together with its contents.
Explanatory note: The disposable toilet-box for cats has been developed in consequence of the necessity to take a cat on a journey and having to stay for a couple of days in a place where they were not organized for animals. The normal equipment for the physiological relieves of the cat was to big for the luggage. In the shops they offered several models of cat litter boxes and separately packagings containing hygienic litter and some other equipment like plastic film or bags for collecting the litter but there wasn't found anything handy, quick to use and easy to get rid of it. So a simple and provisory execution has been realized and, supposing that somebody else might have the same necessity, this was examined and a new, practical and disposable object has been defined.
The characteristic of being the toilet-box for cats disposable has been considered fundamental. The enclosed DRAWING A show a model for better understanding and example.

It is intended to be realized in two different types:
1) Full toilet-box: the packaging (rigid, semirigid or pliable - box, tray or other) containing the sand (or hygienic litter or other material for receiving the animal's escrements) is executed in a way that, after having been opened, it can be used as toilet by the animal and after the use it is destinated to the trash together with its contents.
   A saving of effort is deriving therefrom for not having to transfer the material before and after the use and an advantage from the hygienical point of view for not needing to handle the dirty material too much after use;
   **Explanatory note:** This corresponds to the disposable toilet-box shown on the enclosed DRAWING A. It is made of carton and has a shape that makes it recognizable as being for cats. It is characterized by a particular opening and closing system and a 3-layer bottom to secure it against wetness.
   The particularity of the opening and closing system makes the box becoming higher when it is open and lower when it is closed. This gives more space for the cat when moving inside and avoids the litter to come out of the box while being it lower when it is closed the box becomes smaller, easier to handle and to throw away. Furthermore the cover, besides having a shape that alludes to a cat's head, is executed for being easy to open, to close and to fix when closed for keeping the material safe inside.
   The features and the closing and opening mechanism are described herebelow (the dimensions can be deducted from the enclosed DRAWING A.2): Features: When it is open, the box is a rectangular box with 5 faces: the bottom, 4 vertical faces, no cover (2 short side faces and the frontal and the back face being longer). The 2 side faces and the frontal have the same height. The back face is considerably heigher as the exceeding part becomes the cover of the box. The top edge of this part has a particular shape (3 curves: 2 sharp curves at the corners and a lower plane curve in the middle between them) which is made for fixing the cover when it is closed and which has been cut in a way that makes it look like the two ears and the brow of a cat.
   The movement is made possible by the following plies: there is one out coming horizontal ply at half height all along the 4 side faces which subdivides them into upper and lower part and 4 oblique entering plies distributed as follows: one on each side face, in the upper part and starting from the a.m. horizontal ply where the latter meets with the back face of the box; and respectively one left and one right on the upper part of the frontal face, starting from the horizontal ply where this meets with the side face.
   Closing and opening mechanism: The closing and opening is done by a catenated movement which starts from the cover and is transmitted by the outcoming and entering plies to the the upper part of the box. The outcoming horizontal ply becomes the upper border of the box when it is closed.
   When lowering the cover, this transforms the upper part of the 2 side faces and the frontal face, by acting on the plies, into 3 flaps which are oriented towards the internal side of the box. The cover pushes down the two lateral flaps and the two lateral flaps push down the frontal flap.
   When pushing down the cover until bringing the "brow" under the frontal flap the box is closed. And it is quite secure against accidental opening because the "ears" keep the lateral flaps into position and the pressure exerted by the lateral **flaps** on the extremities of the frontal flap makes the latter resistant against some opposition of the cover.
   The box can be opened by pulling up the two "ears" and bringing the cover in the vertical position. The 3 flaps will then return in their original position and become part of the 4 vertical faces again. (See drawing A.1 at this purpose).
   The 3-layer bottom: This is obtained by folding the 4 flaps of the bottom and sticking them together. The two larger cover each the whole surface of the bottom and, there between, the two smaller together cover the same surface. The way of folding them is very simple and shown on drawing A.3.
2) Empty toilet-box: this is an empty container (box, pliable box, tray or other) which, after having been filled with sand (or hygienic litter or other material for receiving the animal's escrements), is used by the cat as toilet and which after the use is destinated to the trash together with its contents. An advantage is deriving therefrom for having the possibility to fill in the desired quantity of sand (or hygienic litter or other material for receiving the animal's escrements) and an advantage from the hygienical point of view for not needing to handle the dirty material too much after use.
   Explanatory note: The possibility has been considered of making the desposable toilet-box for cats available in an empty version aswell because this might offer some advantages when preferring to choose the quantity of litter to fill in, or wanting to fill in a particular type of litter or considering it easer to stock or to carry.

Both types have been devised in the following two versions: as self-standing toilet-box and as spare toilet-box to be received by another structure.
Explanatory note: In some cases it might be preferable to have a permanent and not degradable structure to hold the disposable toilet-box; for example when it is kept outside. The model shown on drawing A is intended to be a full self standing type but it could also be used in this sense because the dimensions chosen already fit into some available plastic cat litter boxes. Anyway it can also be produced in different sized and proportions and some other models are at study.

The possibility is reserved to realize the disposable toilet-boxes with various types of devicing, for example: that they can be closed after the use, that they are realized with biodegradable materials, that they are realized in different models, shapes and sizes, that they are made recognizable for eventual differentiated trash collections, that they are adapted for beeing used by other animals aswell, etc.
**Explanatory note: A simple devicing of the** illustrated disposable toilet-box for cats is already offered by the covering: when it is open it could be a protection or better separation if it has to be placed against a wall or close to another object, and also it can be used by male cats for putting their marks on it as they do this sometimes on their toilet place. Some other improvements could of course be apported like providing it with a handle for being carried like a suitcase etc. and the possibility has been taken into consideration to modifying it for being used by some other animals aswell. In the latter case the shape of the cover of the model on drawing A would be changed for alluding to another animal.
Some other models of disposable toilet-boxes are at study.

## Claims

1. Disposable toilet-box for cats, comprising a rectangular box with a bottom and four vertical faces;
wherein the back face is longer than the side faces and the frontal face, such that the back face is adapted to form the cover of the box;
wherein the vertical faces comprise an outcoming ply at the same high dividing the vertical faces in an upper part and a lower part;
**characterized i**n that the top edge of the back face has a shape adapted for fixing the cover when it is closed;
oblique plies are provided in the upper part of the side faces, respectively, starting from the meeting point of the respective horizontal ply with the back face of the box; and
oblique plies are provided in the upper part of the frontal face at the meeting point of the horizontal ply with the respective side face.

2. Disposable toilet-box according to claim 1, **characterized in that** the bottom comprises four flaps, two larger flaps covering the whole bottom surface and two smaller flaps foldable between the larger flaps covering together the bottom surface.

3. Disposable toilet-box according to any one of the preceding claims, **characterized in that** it is made of carton.

4. Disposable toilet-box according to any one of the preceding claims, **characterized in that** the toilet box is self-standing.

5. Disposable toilet-box according to any one of the preceding claims, **characterized in that** it is made of biodegradable material.

6. Disposable toilet-box according to any one of the preceding claims, **characterized in that** the top edge of the back face is shaped of three curves, two sharp curves at the corners and a lower plane curve in the middle between the sharp curves.

7. Disposable toilet-box according to any one of the preceding claims, **characterized in that** the box is filled with hygienic litter or sand

## Patentansprüche

1. Wegwerfbares Katzenklo bestehend aus einer rechteckigen Schachtel mit einem Boden und vier senkrechten Wänden;
wobei die Rückwand länger als die Seitenwände und die Vorderwand ist, sodaß die Rückwand angemessen ist, um den Deckel der Schachtel zu bilden;
wobei die senkrechten Wände eine nach außen knickende Falte auf gleicher Höhe haben, welche die senkrechten Wände in ein oberes Teil und ein unteres Teil aufteilt;
mit der Eigenschaft, daß die obere Kante der Rückwand angemessen zugeschnitten ist, um den Deckel festzustecken wenn er geschlossen ist;
schräge Falten sind im oberen Teil der Seitenwände vorhanden, jeweils von dem Treffpunkt der waagerechten Falte mit der Rückwand ausgehend; und schräge Falten sind im oberen Teil der Vorderwand vorhanden, an dem Treffpunkt der waagerechten Falte mit der jeweiligen Seitenwand.

2. Wegwerfbare Kloschachtel gemäß Anspruch 1, mit der Eigenschaft, daß der Boden vier Klappen hat, zwei größere Klappen, die die gesamte Bodenfläche überdecken und zwei kleinere, zwischen die größeren faltbare Klappen, die zusammen die Bodenfläche überdecken.

3. Wegwerfbare Kloschachtel gemäß irgendeinem der oben genannten Ansprüche mit der Eigenschaft, daß sie aus Karton angefertigt ist.

4. Wegwerfbare Kloschachtel gemäß irgendeinem der oben genannten Ansprüche mit der Eigenschaft, daß die Kloschachtel ohne Hilfsmittel steht.

5. Wegwerfbare Kloschachtel gemäß irgendeinem der oben genannten Ansprüche mit der Eigenschaft, daß sie aus biologisch abbaubarem Material angefertigt ist.

6. Wegwerfbare Kloschachtel gemäß irgendeinem der oben genannten Ansprüche mit der Eigenschaft, daß die obere Kante der Rückwand in drei Kurven geschnitten ist, zwei scharfe Kurven an den Ecken und eine niedrigere flache Kurve in der Mitte zwischen den scharfen Kurven.

7. Wegwerfbare Kloschachtel gemäß irgendeinem der oben genannten Ansprüche, **dadurch gekennzeichnet, daß** sie mit hygienischer Streu oder Sand gefüllt ist.

## Revendications

1. Boîte-toilettes jetable pour chats comprendant
une boîte rectangulaire avec un fond et quattre faces verticales;
dont la face postérieure est plus longue que les faces latérales et la face frontale, si bien qu'elle est adaptée pour former le couvercle de la boîte;
dont les faces verticales ont un pli sortant à la même hauteur qui divise les faces verticales dans une partie supérieure et une partie inférieure;
**caractérisée par le fait que** le bord supérieur de la face postérieure a une forme adaptée pour fixer le couvercle quand il est fermé;
des plis obliques se trouvent dans la partie supérieure des faces latérales, commenceant, respectivement, au point de rencontre du respectif pli horizontal avec la face postérieure de la boîte; et
des plis obliques se trouvent dans la partie supérieure de la face frontale au point de rencontre du pli horizontal avec la respective face latérale.

2. Boîte-toilettes jetable selon la revendication 1, carctérisée par la fait que le fond comprend quattre battants, deux plus grands qui couvrent chaqun entièrement la surface du fond et deux plus petits, pliables entre les deux plus grands, couvrant la surface du fond ensamble.

3. Boîte-toilettes jetable selon l'une quelconque des revendications précédentes, carctérisée par le fait qu'elle est réalisée en carton.

4. Boîte-toilettes jetable selon l'une quelconque des revendications précédentes, carctérisée par le fait que la boîte-toilettes se tient debout sans moyens auxiliaires.

5. Boîte-toilettes jetable selon l'une quelconque des revendications précédentes, carctérisée par le fait qu'elle est réalisée en matériel biodégradable.

6. Boîte-toilettes jetable selon l'une quelconque des revendications précédentes, carctérisée par le fait que le bord supérieur de la face postérieure est coupé en trois courbes, deux courbes aigues aux coins et une courbe plus basse et plane au milieu entre les deux courbes aigues.

7. Boîte-toilettes jetable selon l'une quelconque des revendications précédentes, carctérisée par le fait qu'elle est remplie de litiére hygiènique ou sable.
